# EUROPEAN PATENT APPLICATION

(11) **EP 4 751 615 A1**
(43) Date of publication of application: **03.06.2026**
(21) Application number: 24216517.3
(22) Date of filing: 29.11.2024
(51) Int. Cl.: A47C 20/04, B60N 3/00, B62D 33/06

(54) **ADJUSTABLE BED FOR VEHICLE**

(71) Applicant: Starsprings AB, 524 32 Herrljunga (SE)
(72) Inventor: ANDERSSON, Per-Erik, 524 92 Herrljunga (SE)
(74) Representative: Lind Edlund Kenamets Intellectual Property AB

(57) **Abstract**

An adjustable bed for a vehicle, such as for a truck cab, comprises a thin base plate forming a support surface, a non-pivotable first support panel, formed by or connected to the base plate and at least one pivotable second support panel, pivotably connected to the first support panel. The pivotable connection comprises a first rotatable shaft being fixedly connected to the second support panel and rotatably connected to the first support panel or to the base plate. An adjustment mechanism is coupled to the first rotatable shaft and adapted to manipulate the second support panel by rotation of the first rotatable shaft, the adjustment mechanism being arranged at, or in the vicinity of, a long side at the perimeter of the base plate. A further, third, pivotable support panel may also be provided, and connected to the first support panel on an opposite side.

## Description

### TECHNICAL FIELD OF THE INVENTION

The present invention relates to an adjustable bed for a vehicle, such as for a truck cab.

### BACKGROUND OF THE INVENTION

In trucks, in particular heavy duty trucks, there is often a need to provide one or more sleeping area within the truck cab. By way of example, trucks can often include one or more sleeper bunks or berths upon which a driver can rest while another driver operates the truck, or which allows a driver to rest when parking the truck in a suitable rest area or truck stop. The cabs of trucks often include a sleeping area behind the driver and passenger seats. The beds are often arranged in the sleeping area in such a way that they can be folded up against a wall, so that the sleeping area can be used for other purposes, for example for storing freight or personal items, as e.g. shown in US 8635727 and EP 2532277, both by the same applicant. Since the sleeping area often has a limited floor surface, it is of utmost importance that the available space is used efficiently.

Further, it is common to provide a storage space beneath the support structure of the bed, the storage space being accessible by lifting the support structure. Hereby, the support structure forms a lid or hatch to cover the storage space, as known from e.g. EP 2594465, by the same applicant.

However, in order to make it possible to make the bed foldable or useable as a hatch, there is generally a need to make the bed compact and of low weight. This is in conflict with another need, viz. to make the bed comfortable and versatile in use. In particular, there is a general desire to make the bed adjustable, allowing e.g. the head part to be inclined and lifted, which makes it more comfortable to use the bed for sitting or for sleeping in a more upright position. Adjustable beds are per se known, e.g. from WO 02/062184 by the same applicant, and also from WO 01/17400, US 7331557, US 6753922 and US 2010/01816168. However, a general problem with such known adjustable beds is that they are relatively complex, large, heavy and costly. This leaves little room beneath the bed for use e.g. for storage, and also makes folding and lifting of the bed cumbersome or even impossible.

Thus, there is a need for an improved bed for use in truck cabs, which enables both an efficient use of the interior space of the cab and also provides a comfortable bed with adjustment possibilities, and which at the same time can be cost-efficiently produced. The same, or similar, needs are also present for many other types of vehicles, such as busses, trains, mobile homes, campers, caravans, etc.

### SUMMARY OF THE INVENTION

It is therefore an object of the present invention to at least partly overcome these problems, and to provide an improved adjustable bed for a vehicle, such as for a truck cab. These, and other objects that will be apparent from the following, are achieved by an adjustable bed for vehicle, such as for a truck cab, according to the appended claims.

According to a first aspect of the invention there is provided an adjustable bed for a vehicle comprising:
a base plate forming a support surface;
a non-pivotable first support panel, formed by or connected to the base plate;
a pivotable second support panel, pivotably connected to the first support panel, the pivotable connection comprising a first rotatable shaft being fixedly connected to the second support panel and rotatably connected to the first support panel or to the base plate; and
an adjustment mechanism coupled to the first rotatable shaft and adapted to manipulate said second support panel by rotation of the first rotatable shaft, the adjustment mechanism being arranged at, or in the vicinity of, a long side at the perimeter of the base plate.

The adjustable bed is particularly useful and advantageous for truck cabs. However, the adjustable bed may also be used in cabs and cabins in other vehicles having similar space constrains, such as busses, trains, mobile homes, campers, caravans,

The non-pivotable first support panel may be integrated with the base plate, and may e.g. form a monolithic part thereof. However, it may alternatively be provided as a separate panel, connected to the base plate by screws, bolts, adhesive or the like.

The pivotable second support panel can be pivoted to one or more inclined positions. In an embodiment, the second support panel may be positioned in any inclined position between a generally horizontal rest position, in which it is preferably essentially coplanar and parallel with the base plate, and a fully inclined position, such as inclined to 45 degrees or more. This allows for the user to use to find various preferred sleeping positions, and also to use the bed for other purposes than sleeping, such as for reading, watching TV, eating, and the like. In a fully inclined position, the bed may e.g. be used similar to a chair or sofa. Additional pivotable support panels may also be provided, allowing even further adjustability, such as for raising the user's legs.

At the same time, the adjustable bed can be made relatively small and of low weight, and the use of fewer and lighter components also makes production of the adjustable bed more cost-effective, both in terms of material and assembling.

Specifically, the manipulation of the second support panel through a first rotatable shaft being fixedly connected to the second support panel and rotatably connected to the first support panel or the base plate is very space efficient, since the rotatable shaft here extends in the same plane as the support panels, thereby adding minimally to the thickness of the adjustable bed.

Further, the manipulation through the rotatable shaft enables the adjustment mechanism to be coupled to the first rotatable shaft at an end of the rotatable shaft, which in turn enables arrangement of the adjustment mechanism at, or in the vicinity of, a long side at the perimeter of the base plate. This has been found to be very advantageous. The side-by-side arrangement means that the total thickness of the adjustable bed only depends on the respective thicknesses of the adjustment mechanism and the rest of the bed, and not on the combination of these. Thus, the maximum thickness will be limited to the maximum thickness of the adjustment mechanism or the rest of the adjustable bed. It has been found that by such an arrangement the adjustable bed can be made very thin, such as down to about 10 cm or less.

In an embodiment, the adjustable bed, exclusive of the adjustment mechanism and exclusive of any optional mattress or padding layer, has a maximum thickness of 10 cm or less, and preferably of 7 cm or less, and most preferably of 5 cm or less.

Further, an adjustment mechanism is often somewhat thicker and with higher density than the rest of the adjustable bed. By arrangement of the adjustment mechanism at, or in the vicinity of, a long side at the perimeter of the base plate, this allows the adjustment mechanism to be placed as closely as possible to a wall of the vehicle/truck cab, where the effect on the useability of the space underneath the adjustable bed is the lowest. Further, in case the adjustable bed is also foldable, arrangement of the adjustment mechanism, having the highest density, close to the hinges and the pivoting axis, lifting and lowering of the adjustable bed becomes simplified and less heavy.

The adjustment mechanism may further comprise an upper surface, wherein the upper surface is essentially in level with the support surface, the upper surface thereby forming a part of, or an extension to, the support surface. By "essentially in level" is here meant that the surfaces have a height difference of 1 cm or less, and preferably of 0.5 cm or less. Hereby, the adjustment mechanism may add to the size of the support surface of the adjustable bed. The adjustable bed may further comprise a mattress or padding layer arranged to overlay said support panels and to at least partly overlay the upper surface of the adjustment mechanism. Hereby, the upper surface of the adjustment mechanism may be used to extend the sleeping area of the bed. However, it is alternatively possible to use the upper surface for other purposes.

The mattress or padding layer may be fixedly connected to the support surface of the adjustable bed, e.g. with adhesive. Alternatively, the mattress or padding layer may be removably attached, e.g. by Velcro or the like. In a further embodiment, the mattress or padding layer may be loosely arranged on the support surface.

In an embodiment, the adjustable bed further comprises a pivotable third support panel, pivotably connected to the first support panel at a side opposite to the second support panel, the pivotable connection comprising a second rotatable shaft being fixedly connected to the third support panel and rotatably connected to the first support panel or the base plate, wherein the adjustment mechanism is further coupled to the second rotatable shaft and adapted to manipulate said third support panel by rotation of the second rotatable shaft. In the same way as discussed in the foregoing in relation to the second support panel, pivoting of the third support panel through a second rotatable shaft being fixedly connected to the third support panel and rotatably connected to the first support panel or the base plate is very space efficient, since the rotatable shaft here extends in the same plane as the support panels, thereby adding minimally to the thickness of the adjustable bed.

The second support panel may e.g. be used as a back rest whereas the third support panel may be used as a leg rest. The adjustable bed may further comprise a pivotable fourth support panel, pivotably connected to the third support panel at a side opposite to the first support panel. The fourth support panel may be passively manipulated by the manipulation of the third support panel. For example, the fourth support panel may be pivotably connected to a link panel or one or several link arms, pivotably connected to the base plate, at a side opposite to the connection to the third support panel. Hereby, the fourth support panel may, when the third support panel is in a lowered rest position, be parallel to the third support panel and the base plate. In this position, the third and fourth support panels may lay flush on the base plate. When the third support panel is actively pivoted, by the adjustment mechanism, into an inclined position, the fourth support panel may be passively lifted between the third support panel and the link panel/arm(s). Hereby, the fourth support panel may be lifted, but may remain in an essentially horizontal position. Alternatively, the fourth support panel may be inclined, but at a different angle than the third support panel, depending on the relative lengths of the third support panel, the fourth support panel and the link panel/arm(s). For example, the fourth support panel may assume an inclination in an opposite direction than the third support panel. In another embodiment, the side of the fourth support panel opposite to the third support panel may be arranged to slide or glide in relation to the base plate, but remain in contact with the base plate at all times. The third support panel may be arranged to support the thighs of the user, whereas the fourth support panel may be arranged to support the calves and feet of the user.

The adjustment mechanism may comprise a powered actuator, such as an electric actuator. The actuator may be directly connected to the one or more rotatable shaft, to provide a rotational movement to the shafts. Alternatively, the actuator may be a linear actuator, providing a linear movement which may be translated into a rotational movement to the shaft(s) by a link arm, a wire, a gear and rack mechanism, or the like. With use of a powered actuator, the adjustment may be performed automatically, by pressing control buttons arranged on the adjustable bed, by operation of a remote control, by operation of an app on a smartphone wirelessly connected to the adjustable bed, and/or the like.

Alternatively, the adjustment mechanism may be a passively operated actuator. The adjustment mechanism may e.g. comprise at least one gas spring, coupled to the rotatable shaft(s). In such embodiments, the actuator may be operated to lift the support panel, whereas lowering of the support panel may be performed manually, by manually applying a downward force pushing a lifted support panel back into a rest position. Hereby, a semi-automatic control may be provided, where lifting of a support panel may be obtained by pushing a control button, operating a handle, or the like, but where movement in the opposite direction is performed by manual force.

In yet a further embodiment, the rotatable shaft may be manipulated manually, through a mechanical system, such as a crank and gear mechanism.

The first and second rotatable shafts are preferably independently operable. This may be enabled by a single adjustment mechanism and/or actuator unit having two independently controllable actuator outlets, each operating on one of the rotatable shafts. Alternatively, separate adjustment mechanisms and/or actuators may be provided for the rotatable shafts.

Alternatively, the rotatable shafts may be operably connected and may e.g. be arranged to rotate in synchronization with each other.

In an embodiment, the adjustable bed further comprises hinges for connecting the base plate to a wall of the vehicle/truck cab, the base plate thereby being pivotally moveable between a generally horizontal resting position and a non-horizontal lifted position. This is enabled by the adjustable bed being thin and of low weight. Preferably, the hinges are provided at, or in the vicinity of, the same long side of the base plate as the adjustment mechanism. This is of great advantage, since the adjustment mechanism is generally relatively heavy, and with a higher density than the rest of the adjustable bed.

At least one of the base plate and the support panels may be formed by a lightweight material of relatively low density, such as a composite material, or the like. In particular, the base plate and/or the support panels may be formed as fiberglass honeycomb panels. However, many other materials and structures having similar properties may also be used, such as different plastic materials, wood-plastic composites, plywood, plyboard panels, etc. The base plate and the pivotable panels may be formed by the same material or by different materials.

In an embodiment, the base plate forms a hatch arranged overlying an underneath storage compartment, wherein the hatch in the resting position closes the storage compartment and in the lifted position forms an access opening into the storage compartment. This is enabled by the thin adjustable bed, providing much available space below the adjustable bed.

In an embodiment, the lifted position is a generally vertical position. Hereby, the adjustable bed will, in the lifted position, be essentially parallel and flush to the cab wall, thereby minimizing the occupied space. In such an embodiment, the adjustable bed may further comprise a folding table pivotably connected to a major side of the base plate being opposite to the first support plate. In such an embodiment, the space could be used in many different ways. In a resting state, the adjustable bed may be lowered, for use as a bed or seat. In an upright, lifted position, the space may be used for any need. Further, with a foldable table, the table may be folded down for eating or the like.

In an embodiment, the major surface of the base plate being opposite to the first support panel forms a generally flat bottom surface. Hereby, a relatively flat bottom towards the underneath space is provided, thereby making the underneath space more useable and versatile.

The space underneath the base plate may be used as a storage container, with a top opening closed by the base plate. However, alternatively the space underneath the base plate may be used in other ways, such as by provision of one or more pull-out drawers beneath the base plate, one or more cabinet with a side door, etc. In such an embodiment, the base plate need not be foldable. In an embodiment, the cabinet may e.g. be used as a refrigerator, freezer or the like.

The support surface of the base plate is preferably essentially solid, any openings in the support surface covering less than 20% of the total area of the support surface, and preferably less than 10%, and more preferably less than 5%. Preferably, the base plate may be solid, without any throughgoing openings. Hereby, the base plate provides a good coverage over the underneath space even when the pivotably moveable support plate(s) is/are in lifted positions.

These and other features and advantages of the present invention will in the following be further clarified with reference to the embodiments described hereinafter.

### BRIEF DESCRIPTION OF THE DRAWINGS

The present invention will be described in more detail with reference to the appended drawings, showing currently preferred embodiments of the invention.
Fig. 1 is a perspective sideview of an adjustable bed in a closed position, in accordance with an embodiment.
Fig. 2 is a perspective sideview of the adjustable bed of Fig. 1 in an opened position.

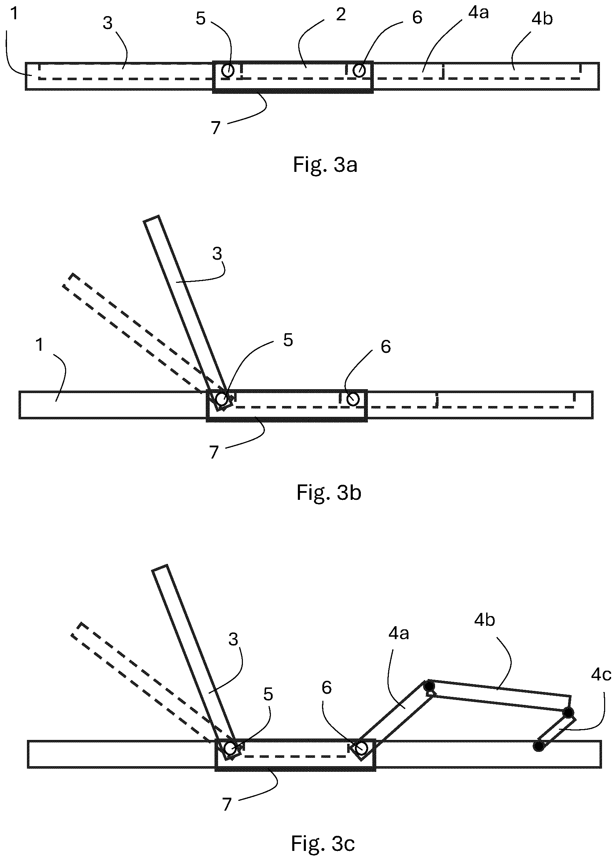

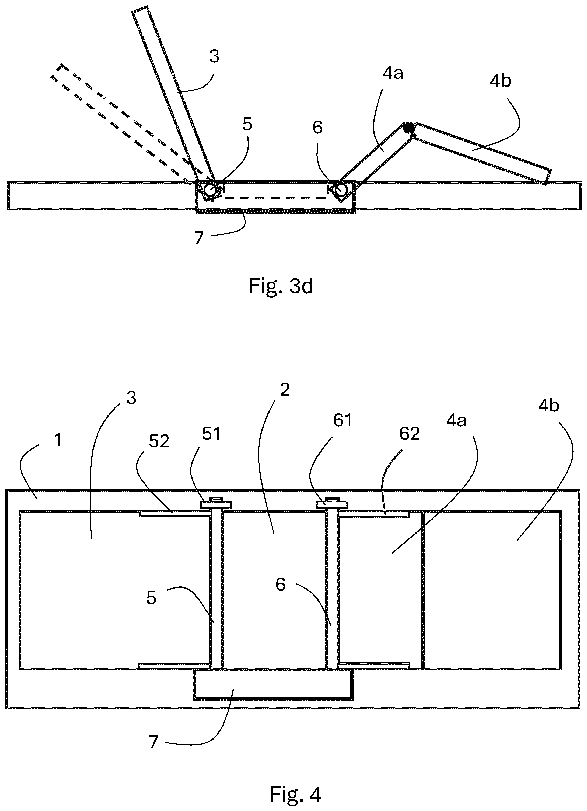

Fig. 3a-d are schematic side views of an adjustable bed with the support panels in various positions, where Fig. 3a illustrates the adjustable bed with the support panels in lowered/horizontal resting positions, Fig. 3b illustrates the adjustable bed with back support panel raised in a fully raised position, and with an intermediate raised position in dashed lines, Fig. 3c is similar to the position illustrated in Fig. 3b, but where also a leg support is arranged in a raised position, and Fig. 3d is similar to the position illustrated in Fig. 3c, but with an alternative leg support arrangement.
Fig. 4 is a schematic top view of an adjustable bed in accordance with an embodiment.
Fig. 5 is a schematic sideview of an adjustable bed provided with a mattress, in accordance with an embodiment.
Fig. 6 is a schematic sideview of a truck cab with an adjustable bed in accordance with an embodiment.
Fig. 7a is a perspective sideview of an adjustable bed with only one pivotable support plate, in accordance with an embodiment and Fig. 7b is a more detailed view of the actuator of the adjustable bed of Fig. 7a.
Fig. 8 is a perspective sideview of an adjustable bed generally of the same type as in Fig. 1, but where the pivotable support panels are arranged on top of a generally flat base plate, in accordance with an embodiment.
Fig. 9 is a perspective sideview of an adjustable bed generally of the same type as in Fig. 7a, but where the pivotable support panels are arranged on top of a generally flat base plate, in accordance with an embodiment.

### DETAILED DESCRIPTION OF CURRENTLY PREFERRED EMBODIMENTS

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

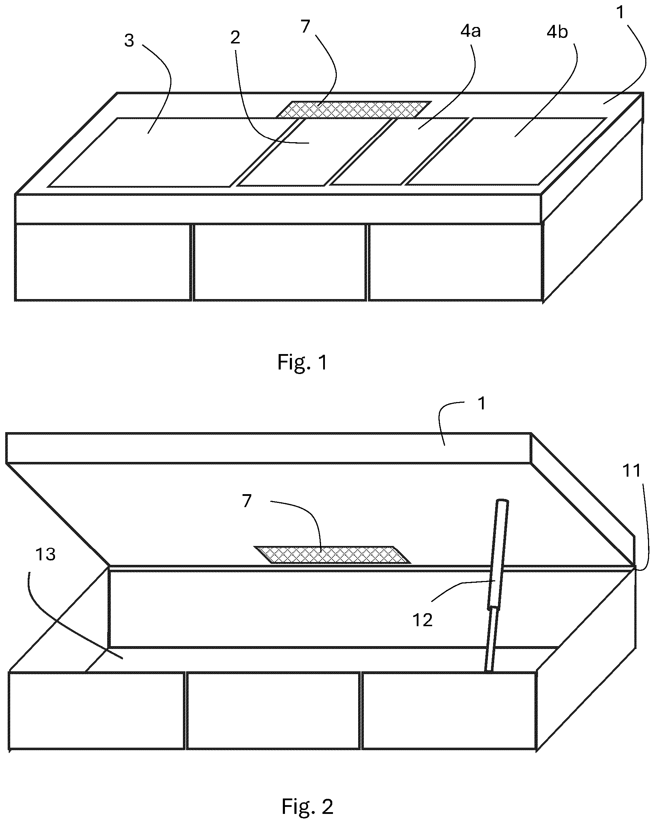

With reference to Figs. 1-4, an adjustable bed comprises a base plate 1, forming a support surface. A non-pivotable first support panel 2 is formed by or connected to the base plate 1. Further, at least one pivotable support panel is pivotably connected to the first support panel 2. In the illustrative example, a plurality of pivotable support panels are provided, including a pivotable second support panel 3, for supporting the user's head and back, and a pivotable third support panel 4a, for supporting the user's legs and/or feet, and in particular the user's thighs.

The support panels may be arranged on top of a generally flat support surface of the base plate. Alternatively, the support panels may be arranged in recessed areas of the support surface of the base plate, thereby providing an overall flat surface of the adjustable bed.

The non-pivotable first support panel 2 may be integrated with the base plate, and may e.g. form a monolithic part thereof. However, it may alternatively be provided as a separate panel, connected to the base plate by screws, bolts, adhesive or the like.

The pivotable second and/or third support panel(s) 3, 4a can be pivoted to one or more inclined positions. In an embodiment the second support panel may be positioned in any inclined position between a generally horizontal rest position, as shown e.g. in Fig. 3a, in which it is preferably essentially coplanar and parallel with the base plate, and a fully inclined position, such as inclined to 45 degrees or more, as shown in Fig. 3b. This allows the user to find various preferred sleeping positions, and also to use the bed for other purposes than sleeping, such as for reading, watching TV, eating, and the like. In a fully inclined position, the bed may e.g. be used similar to a chair or sofa. Additional pivotable support panels, such as the pivotable support panel 4a, may also be provided, allowing even further adjustability, such as for raising the user's legs.

In an embodiment, the adjustable bed further comprises a pivotable third support panel 4a, pivotably connected to the first support panel 2 at a side opposite to the second support panel 3.

The pivotable connection between the second pivotable support plate 3 and the non-pivotable first support panel 2 may comprise a first rotatable shaft 5 being fixedly connected to the second support panel 3 and rotatably connected to the first support panel 2 or the base plate 1.

The pivotable connection between the third pivotable support plate 4a and the non-pivotable first support panel 2 may comprise a second rotatable shaft 6 being fixedly connected to the third support panel 4a and rotatably connected to the first support panel 2 or the base plate 1.

The rotatable shafts 5, 6 are preferably arranged at the intersection between the panels, and generally extend parallel to the non-pivotable first support panel 2 and the base plate 1. Each rotatable shaft generally extends in a width direction of the adjustable bed, and generally perpendicular to the length direction of the adjustable bed. The lengths of the rotatable shafts 5, 6 is preferably longer than a corresponding width of the support panels, so that ends of the rotatable shafts protrude out from the edges of the support panels on each side. One end of each rotatable shaft 5, 6, is connected to an adjustment mechanism 7, whereas the opposite end of each rotatable shaft 5, 6 is rotatably secured to the base plate, e.g. with rotation bearings or bushings 51, 61.

For securement of the pivotable panels to the rotatable shafts, arms 52, 62 may be fixedly connected to the rotatable shafts and to the pivotable panels. The arms may be arranged to extend over at least a part of the length of the pivotable panels. One or more arm(s) may be provided on each rotatable shaft. In the illustrative example, two arms are provided on each rotatable shaft, but more than two arms may also be provided, and it is also feasible to use only one arm. In such an embodiment, wider arms may be used, or even a plate extending over a substantial length of the width of the pivotable panel. In the illustrative example, the arms are arranged at the sides of the pivotable panels. However, alternatively, the arms may be arranged more centralized, and may also be arranged beneath the pivotable panels, and be connected to the bottom side of the pivotable panels.

At least one of the base plate 1 and the support panels 2, 3, 4a, 4b may be formed by a lightweight material of relatively low density, such as a composite material, or the like. In particular, the base plate and/or the support panels may be formed as fiberglass honeycomb panels. However, many other materials and structures having similar properties may also be used, such as different plastic materials, wood-plastic composites, plywood, plyboard panels, etc. The base plate and the pivotable panels may be formed by the same material or by different materials.

The rotatable shafts 5, 6 and the arms 52, 62 fixedly connected to the shafts are preferably made of metal, such as steel. The rotatable shafts are preferably tubular but may also be solid. The rotatable shafts are preferably cylindrical, and may have an outer diameter in the range of 1-4 cm, and preferably in the range of 1.5-3 cm.

The adjustment mechanism 7 is arranged at a side of the adjustable bed, outside the bounds of the support panels when viewed from above. The adjustment mechanism is coupled to the first rotatable shaft 5 and/or the second rotatable shaft 6, and adapted to manipulate one or more of the pivotable support panels by rotation of the rotatable shaft(s). The adjustment mechanism is arranged at, or in the vicinity of, a long side at the perimeter of the base plate 1.

The adjustment mechanism 7 is coupled to the first rotatable shaft 5 for manipulation and pivoting of the second support panel 3. The same adjustment mechanism 7, or a separate adjustment mechanism, is further coupled to the second rotatable shaft 6 for manipulation and pivoting of the third support panel 4a.

The second support panel 3 may e.g. be used as a back rest, and may be lowered into a resting position, as illustrated in e.g. Fig. 3a, when the adjustable bed is used for sleeping. In the resting position the second support panel 3 is generally parallel with the base plate, and in a generally horizontal position. When pivoted to a raised, inclined position, as e.g. illustrated in Fig. 3b, the second support panel 3 can be raised to e.g. 45 degrees inclination. Preferably, the support panel 3 may also be raised to any position between the resting position and the fully raised position, as illustrated in dashed lines in Fig. 3b. When in a raised position, the adjustable bed may be used for sitting, e.g. for watching TV, reading or eating.

The third support 4a panel may be used as a leg rest. The adjustable bed may further comprise a pivotable fourth support panel 4b, pivotably connected to the third support panel 4a at a side opposite to the first support panel 2. The fourth support panel 4b may be passively manipulated by the manipulation of the third support panel 4a.

For example, the fourth support panel 4b may be pivotably connected to a link panel or one or several link arms 4c, pivotably connected to the base plate, at a side opposite to the connection to the third support panel 4a. Hereby, the fourth support panel 4b may, when the third support panel 4a is in a lowered rest position, be parallel to the third support panel and the base plate. In this position, the third and fourth support panels 4a, 4b may lay flush on the base plate 1. When the third support panel 4a is actively pivoted, by the adjustment mechanism, into an inclined position, as illustrated in Fig. 3c, the fourth support panel 4b may be passively lifted between the third support panel 4a and the link panel/arm(s) 4c. Hereby, the fourth support panel 4b may be lifted, but may remain in an essentially horizontal position. Alternatively, the fourth support panel 4b may be inclined, but at a different angle than the third support panel 4a, depending on the relative lengths of the third support panel 4a, the fourth support panel 4b and the link panel/arm(s) 4c. For example, the fourth support panel 4b may assume an inclination in an opposite direction than the third support panel 4a, as in the illustrative example of Fig. 3c.

In another embodiment, as illustrated in Fig. 3d, the end side of the fourth support panel 4b opposite to the third support panel 4a may be arranged to slide or glide in relation to the base plate 1 but remain in contact with the base plate at all times. Thus, in such an embodiment, there is no need for the link panel/arm(s) 4c.

The third support panel 4a may be arranged to support the thighs of the user, whereas the fourth support panel 4b may be arranged to support the calves and feet of the user.

The manipulation through the rotatable shafts enables the adjustment mechanism 7 to be coupled to the rotatable shafts at ends of the rotatable shafts, which in turn enables arrangement of the adjustment mechanism at, or in the vicinity of, a long side at the perimeter of the base plate 1, in a side-by-side arrangement to the support plates. This minimizes the thickness of the adjustable bed, and in particular the part exclusive of the adjustment mechanism, which can consequently be made as thin as down to 5 or 4 cm, or even thinner, exclusive of any optional mattress or padding layer.

The adjustment mechanism may be somewhat thicker and with higher density than the rest of the adjustable bed. To this end, the adjustment mechanism may to some extent protrude beneath the bottom side of the base plate. By arrangement of the adjustment mechanism at, or in the vicinity of, a long side at the perimeter of the base plate, this allows the adjustment mechanism to be placed as closely as possible to a wall of the vehicle/truck cab, where the effect on the useability of the space underneath the adjustable bed is the lowest.

Further, in case the adjustable bed is also foldable, as best seen in the illustrative example of Figs. 1 and 2, arrangement of the adjustment mechanism, having the highest density, close to the hinges 11 and the pivoting axis, lifting and lowering of the adjustable bed becomes simplified and less heavy.

On the upper side, the adjustment mechanism may comprise an upper surface, wherein the upper surface is essentially in level with the support surface formed by the base plate 1, the upper surface thereby forming a part of, or an extension to, the support surface, as seen e.g. in the illustrative example of Fig. 1. Hereby, the adjustment mechanism may add to the size of the support surface of the adjustable bed.

Th bottom side of the base plate, i.e. the major surface of the base plate being opposite to the first support panel, preferably forms a generally flat bottom surface. Hereby, a relatively flat bottom towards the underneath space is provided, thereby making the underneath space more useable and versatile.

The adjustment mechanism 7 provides a rotational force to the end of one or more rotatable shafts. Such adjustment mechanisms may be realized in various ways, as is per se known in the art.

In an embodiment, the adjustment mechanism 7 comprises a powered actuator, such as an electric actuator. The actuator may be directly connected to the one or more rotatable shaft(s) 5, 6, to provide a rotational movement to the shafts. Alternatively, the actuator may be a linear actuator, providing a linear movement which may be translated into a rotational movement to the shaft(s) by a link arm, a wire, a gear and rack mechanism, or the like. With use of a powered actuator, the adjustment may be performed automatically, by pressing control buttons arranged on the adjustable bed, by operation of a remote control, by operation of an app on a smartphone wirelessly connected to the adjustable bed, and/or the like.

Alternatively, the adjustment mechanism 7 may be a passively operated actuator. The adjustment mechanism may e.g. comprise at least one gas spring, coupled to the rotatable shaft(s) 5,6. In such embodiments, the actuator may be operated to lift the pivotable support panel(s), whereas lowering of the support panel(s) may be performed manually, by manually applying a downward force pushing a lifted support panel back into a rest position. Hereby, a semi-automatic control may be provided, where lifting of a support panel may be obtained by pushing a control button, operating a handle, or the like, but where movement in the opposite direction is performed by manual force.

In yet a further embodiment, the rotatable shaft may be manipulated manually, through a mechanical system, such as a crank and gear mechanism.

The first and second rotatable shafts 5, 6 are preferably independently operable. This may be enabled by a single adjustment mechanism or actuator unit having two independently controllable actuator outlets, each operating on one of the rotatable shafts. Alternatively, separate adjustment mechanisms and/or actuators may be provided for the rotatable shafts 5,6.

Alternatively, the rotatable shafts may be operably connected, e.g. by being connected through a chain, gears, and/or the like, and may e.g. be arranged to rotate in synchronization with each other.

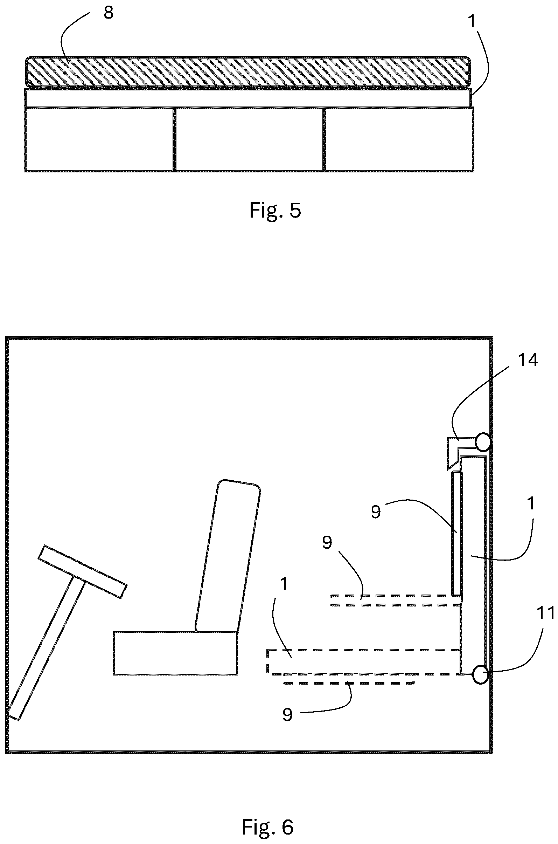

As best seen in Fig. 5, the adjustable bed may further comprise a mattress or padding layer 8 arranged to overlay the support panels and the base plate 1. The mattress or padding layer 8 may also extend out from the support panels and may e.g. be arranged to at least partly overlay the upper surface of the adjustment mechanism. Hereby, the upper surface of the adjustment mechanism may be used to extend the sleeping area of the bed. However, it is alternatively possible to use the upper surface for other purposes.

The mattress or padding layer 8 may be fixedly connected to the support surface of the adjustable bed, e.g. with adhesive. Alternatively, the mattress or padding layer may be removably attached, e.g. by Velcro or the like. In a further embodiment, the mattress or padding layer may be loosely arranged on the support surface.

In an embodiment, the adjustable bed further comprises hinges 11 for connecting the base plate 1 to a wall or similar structure of the vehicle/truck cab. The base plate hereby becomes pivotally moveable between a generally horizontal resting position and a non-horizontal lifted position. Preferably, the hinges are provided at, or in the vicinity of, the same long side of the base plate as the adjustment mechanism 7. Thus, the hinge(s) 11 and the adjustment mechanism 7 are preferably arranged relatively close to each other.

In an embodiment, as illustrated in Fig. 1 and 2, the base plate 1 with the hinge(s) 11 forms a hatch arranged overlying an underneath storage compartment 13. A mechanism, such as a spring or cylinder 12, may be arranged to maintain the base plate in an opened position. In the resting position, as shown in Fig. 1, the hatch closes the storage compartment 13 and in the lifted position, as shown in Fig. 2, forms an access opening into the storage compartment 13.

In an embodiment, as illustrated e.g. in Fig. 6, the lifted position is a generally vertical position. Hereby, the adjustable bed will, in the lifted position, be essentially parallel and flush to the cab wall, thereby minimizing the occupied space. An arrangement 14, such as a snap lock or hasp, may be arranged to secure the adjustable bed in the lifted position. In such an embodiment, the adjustable bed may further comprise a folding table 9 pivotably connected to a major side of the base plate 1 being opposite to the first support panel, i.e. the bottom side. In such an embodiment, the space could be used in many different ways. In a resting state, the adjustable bed may be lowered, for use as a bed or seat. In an upright, lifted position, the space may be used for any need. Further, with a foldable table 9, the table may be folded down for eating or the like, as illustrated with dashed lines in Fig. 6.

The space underneath the base plate may be used as a storage container, with a top opening closed by the base plate, as in the illustrative example of Figs. 1 and 2. However, alternatively the space underneath the base plate may be used in other ways, such as by provision of one or more pull-out drawers beneath the base plate, one or more cabinet(s) with a side door, etc. In such an embodiment, the base plate need not be foldable. In an embodiment, the cabinet may e.g. be used as a refrigerator, freezer or the like.

The support surface of the base plate is preferably essentially solid, any openings in the support surface covering less than 20% of the total area of the support surface, and preferably less than 10%, and more preferably less than 5%. Preferably, the base plate may be solid, without any throughgoing openings. Hereby, the base plate provides a good coverage over the underneath space even when the pivotably moveable support panel(s) is/are in lifted positions.

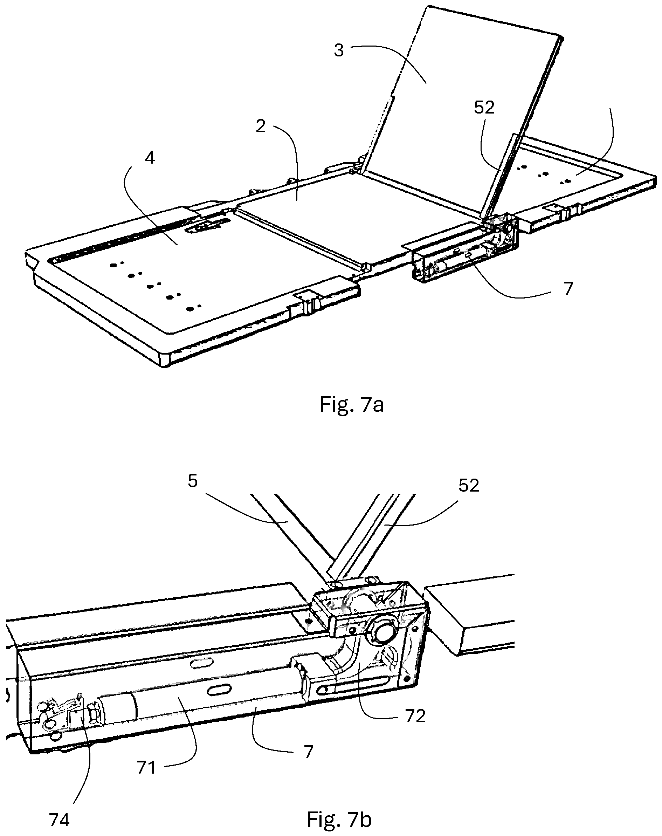

In the previously discussed embodiments the adjustable bed comprises two pivotable support panels. However, the adjustable bed may alternatively have only one pivotable support panel. Such an embodiment will now be discussed with reference to Figs. 7a and 7b. Here, the support panel 3 functioning as a backrest is pivotable, whereas the remaining support panels 2, 4 are non-pivotable. The non-pivotable support panels 2, 4 may be arranged as separate panels, fixedly connected to the base plate 1, or be formed by the base plate, or as monolithic, integrated parts thereof. The non-pivotable support panels 2, 4 may further be combined to a single, larger support panel.

As in previously discussed embodiments, the pivotable support panel 3 is connected to the first support panel 2, or to the base plate 1, by a rotatable shaft 5, which is operated by an adjustment mechanism 7. The rotatable shaft 5 is fixedly connected to the pivotable support panel 3, and rotatably connected to the first support panel 2, or to the base plate 1. The connection between the pivotable support panel 3 and the rotatable shaft 5 may, as in previously discussed embodiments, be formed by arms 52 or the like, fixedly connected to the rotatable shaft and the pivotable support panel, e.g. along part of the sides of the support panel.

The adjustment mechanism is, as in previously discussed embodiments, arranged at a side of the adjustable bed, thereby arranged not to overlie the support panels. In this embodiment, the adjustment mechanism is also arranged at the side of the base plate 1, thereby also not overlying the base plate.

The adjustment mechanism may be actively powered, such as being realized by electric actuators, or may be a passively activated or mechanical adjustment mechanism, and may be of any of the types of adjustment mechanism discussed in the foregoing.

In the illustrative example of Figs. 7a and 7b, the adjustment mechanism 7 is a passively operated actuator. The adjustment mechanism here comprises at least one gas spring 71, coupled to the rotatable shaft 5. When activated, by operation of an activation element 74, such as a control button, a shaft of the gas spring is expelled out from a cylinder, and acts on an arm 72, fixedly connected to an end of the rotatable shaft 5. Thus, when the gas spring is activated, the rotatable shaft 5 is rotated, thereby pivoting the support panel 3 upwards. Lowering of the support panel 3 may be performed manually, by manually applying a downward force pushing a lifted support panel back into a rest position and thereby also again contracting the gas spring. Hereby, a semi-automatic control may be provided, where lifting of a support panel may be obtained by pushing a control button, operating a handle, or the like, but where movement in the opposite direction is performed by manual force.

The activation element 74 may be operated remotely from the adjustment mechanism 7. For example, the activation element 74 may be connected to a wire, rod or the like, enabling the activation element to be operable from a different side of the adjustable bed. Such remote operation is e.g. beneficial when the adjustment mechanism 7 is arranged close to a wall of the vehicle/truck cab.

In the embodiments discussed so far, and as best seen in e.g. Figs. 3a and 7a, the part(s) of the base plate on which the pivotable support panel(s) rest(s) when in a lowered position are at least partly framed by a surrounding part of the base plate. The part(s) of the base plate accommodating the pivotable support panel(s) may be lowered or depressed in relation to the frame, to form a shallow trough shape. Hereby, the frame and the pivotable support panel(s), when in the lowered position, may form a relatively even, flat upper surface.

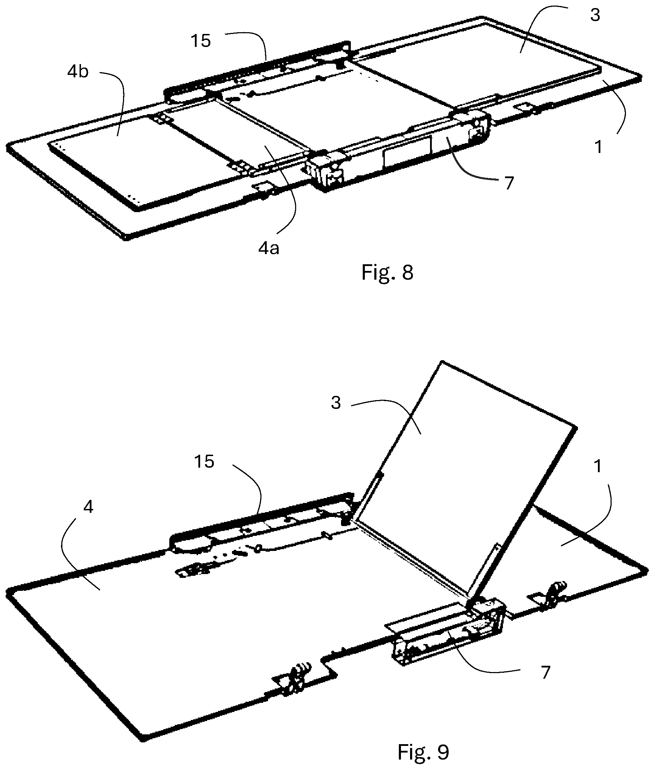

However, alternatively, the base plate may be generally flat, without any frames surrounding the pivotable support panel((s). Hereby, the pivotable support panel(s) may protrude upwards from the surrounding base plate, e.g. with a height of 1-2 cm. Examples of such embodiments are illustrated in Figs. 8 and 9.

The embodiment of Fig. 8 generally corresponds to the embodiment discussed in relation to Figs. 1-4, but with the difference that the support panels 3, 4a and 4b are here arranged on top of a generally flat base plate 1, whereby a small height difference is provided between the support panels, when in a lowered position, and the surrounding and framing base plate.

The embodiment of Fig. 9 generally corresponds to the embodiment discussed in relation to Figs. 7a-b, but also here with the difference that the support panel 3 is arranged on top of a generally flat base plate 1, whereby a small height difference is provided between the support panel, when in a lowered position, and the surrounding and framing base plate.

In both the embodiment of Fig. 8 and the embodiment of Fig. 9, a rim or edging 15 has been arranged at the side of the base plate being opposite to the adjustment mechanism. The rim provides a short wall extending up from the edge of the base plate. The rim/edging may, as in the illustrative examples, extend over only a limited section of the side of the base plate, such as over only a central section. However, alternatively, the rim/edging may extend over several sections of the side of the base plate, such as over 2 or 3 separated sections. It is also feasible to provide a rim/edging extending over the full length of the side of the base plate. The rim/edging may ensure that a mattress arranged on top of the adjustable bed is maintained in place, especially if not connected in any other way. The rim/edging also provides a cleaner and more appealing side front of the adjustable bed towards the front of the cab.

Even though such a rim/edging is particularly useful in embodiments such as the ones of Figs. 8 and 9, the same or similar types of rims/edgings may also be used in all or any of the other embodiments discussed in the foregoing.

The person skilled in the art realizes that the present invention by no means is limited to the preferred embodiments described above. On the contrary, many modifications and variations are possible within the scope of the appended claims. For example, the number of pivotable support plates may one or two, but may also be more than two. Further, various types of adjustment mechanisms may be used for providing a rotational force to the one or more rotatable shafts. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An adjustable bed for a vehicle, such as for a truck cab, comprising:
a base plate forming a support surface;
a non-pivotable first support panel, formed by or connected to the base plate;
a pivotable second support panel, pivotably connected to the first support panel, the pivotable connection comprising a first rotatable shaft being fixedly connected to the second support panel and rotatably connected to the first support panel or to the base plate; and
an adjustment mechanism coupled to the first rotatable shaft and adapted to manipulate said second support panel by rotation of the first rotatable shaft, the adjustment mechanism being arranged at, or in the vicinity of, a long side at the perimeter of the base plate.

2. The adjustable bed of claim 1, wherein the adjustment mechanism comprises an upper surface, wherein the upper surface is essentially in level with the support surface, the upper surface thereby forming a part of, or an extension to, the support surface.

3. The adjustable bed of claim 2, further comprising a mattress or padding layer arranged to overlay said support panels and to at least partly overlay the upper surface of the adjustment mechanism.

4. The adjustable bed of any one of the preceding claims, further comprising a pivotable third support panel, pivotably connected to the first support panel at a side opposite to the second support panel, the pivotable connection comprising a second rotatable shaft being fixedly connected to the third support panel and rotatably connected to the first support panel or to the base plate, wherein the adjustment mechanism is further coupled to the second rotatable shaft and adapted to manipulate said third support panel by rotation of the second rotatable shaft.

5. The adjustable bed of claim 4, further comprising a pivotable fourth support panel, pivotably connected to the third support panel at a side opposite to the first support panel.

6. The adjustable bed of any one of the claims 1-4, wherein the adjustment mechanism comprises at least one gas spring, coupled to the rotatable shaft(s).

7. The adjustable bed of any one of the preceding claims, further comprising hinges for connecting the base plate to a wall of the vehicle/truck cab, the base plate thereby being pivotally moveable between a generally horizontal resting position and a non-horizontal lifted position.

8. The adjustable bed of claim 7, wherein the hinges are provided at, or in the vicinity of, the same long side of the base plate as the adjustment mechanism.

9. The adjustable bed of claim 7 or 8, wherein the base plate forms a hatch arranged overlying an underneath storage compartment, wherein the hatch in the resting position closes the storage compartment and in the lifted position forms an access opening into the storage compartment.

10. The adjustable bed of any one of the claims 7-9, wherein the lifted position is a generally vertical position.

11. The adjustable bed of claim 10, further comprising a folding table pivotably connected to a major side of the base plate being opposite to the first support panel.

12. The adjustable bed of any one of the preceding claims, wherein the major surface of the base plate being opposite to the first support panel forms a generally flat bottom surface.

13. The adjustable bed of any one of the preceding claims, wherein the adjustable bed, exclusive of the adjustment mechanism and exclusive of any optional mattress or padding layer, has a maximum thickness of 10 cm or less, and preferably of 7 cm or less, and most preferably of 5 cm or less.

14. The adjustable bed of any one of the preceding claims, wherein the support surface of the base plate is essentially solid, any openings in the support surface covering less than 20% of the total area of the support surface, and preferably less than 10%, and more preferably less than 5%.

15. The adjustable bed of any one of the preceding claims, wherein the base plate is solid, without any throughgoing openings.
